# EUROPEAN PATENT APPLICATION

(11) **EP 4 579 866 A1**
(43) Date of publication of application: **02.07.2025**
(21) Application number: 23220626.8
(22) Date of filing: 28.12.2023
(51) Int. Cl.: H01M 10/42, H01M 50/574, H01M 50/576, H01M 50/579

(54) **SYSTEMS AND METHODS FOR SECURE POWER DELIVERY**

(71) Applicant: Huin, Steeve, 2134 AN Hoofddorp (NL)
(72) Inventor: Huin, Steeve, 2134 AN Hoofddorp (NL)
(74) Representative: Boult Wade Tennant LLP

(57) **Abstract**

Disclosed herein is a battery comprising: an electrical power supply portion configured to supply electrical power to a device connected to the battery; and a control portion configured to control a power output of the electrical power supply portion. The control portion is configured to control the power output of the electrical power supply portion based on a determined environmental condition of the battery.

## Description

### FIELD OF THE INVENTION

The present invention relates to a battery configured to output power based on a determined state of motion of the battery for improving security of battery powered devices.

### BACKGROUND

It is becoming commonplace to provide electronic devices which control access to assets such as vehicles or buildings. One example of such electronic devices is a keyless entry system for a vehicle, sometimes known as a remote keyless system (RKS), a remote keyless entry (RKE) system, or remote central locking. These systems typically include an electronic system installed at the vehicle and a corresponding electronic system configured as a key fob with one or more buttons for interacting with the vehicle remotely.

RKS often make use of short-range radio transmissions to control the locks, ignition, or other functionality of a vehicle. These short-range radio transmissions have a range of up to a few tens of metres. In a simplified example, a predetermined code may be stored on both the key fob and the vehicle system. This code can then be encoded onto a radio transmission generated by the key fob in response to pressing a button on the key fob. If the radio transmission of the key fob is received by the vehicle, the vehicle can decode the transmission and check that the received code corresponds to the code held in its own system. If the code received from the key fob matches the code stored on the vehicle system, the vehicle system may, for example, unlock one or more doors of the vehicle.

So-called 'passive' keyless entry (PKE) systems are similar to the RKS systems described above, but they do not require a user to press a button in order for the key fob to control the locks, ignition, or other functionality of the vehicle. Instead, the proximity of the vehicle system and key fob is used to initiate an interaction between the vehicle system and the key fob.

PKE implementations generally require each of the vehicle system and the key fob to both send and receive wireless messages to thereby engage in challenge-response authentication. In a common PKE scenario, the vehicle system can be triggered (e.g. by close proximity of the key fob) to send a wireless transmission, signal, or message, which provides a 'challenge' to listening devices to provide a password. A suitably configured key fob can provide a 'response' transmission, signal, or message which contains a password. The vehicle system can then check the password sent in the response from the key fob and, if verified, unlock the doors, start the ignition, etc.

Despite the implementation of challenge-response authentication, PKE systems (and indeed a number of other electronic devices which control access to assets) are potentially vulnerable to a form of cyberattack or hack known as a 'relay' attack. Relay attacks exploit communications between devices in order to record and potentially manipulate ostensibly private messages passed between the devices.

Consider a scenario where a PKE vehicle system and key fob are placed outside of their usual wireless communication range - for example, the vehicle may be parked on a street, and the key fob may be stored inside a nearby house. In a simplified example of a relay attack on this PKE arrangement, an unauthorized third party with a pair of transceiver devices places a first transceiver device near the vehicle system, and a second transceiver device near the key fob. The first transceiver device near the vehicle is able to trigger the vehicle system to broadcast the challenge message and boost the signal or retransmit the challenge with enough power for it to be 'relayed' to the second transceiver device. The second transceiver device can then broadcast the challenge message to the key fob and listen for its response. Once the response is received from the key fob, the second transceiver device boosts the signal or retransmits the response with enough power for it to be 'relayed' back to the first transceiver device. The first transceiver device then broadcasts the received response to the vehicle system, thereby unlocking the vehicle. This relay method does not necessarily require specific knowledge of the password or encryption scheme used by the PKE.

One way to mitigate against a relay attack on a PKE is to store the PKE key fob in a box or case which blocks radio transmissions to and from the key fob, such as a faraday cage. However, having to store the PKE in such a container is inconvenient and may interfere with the legitimate operation of the PKE.

An ever-expanding cache of hardware and software available to would-be hackers means that relay attacks are becoming increasingly easy to implement. There is therefore a need for a device or system which is able to automatically mitigate against attacks such as relay attacks on wireless devices.

### SUMMARY OF THE INVENTION

It is an object of the invention to provide systems and methods for controlling a supply of power to a device based on one or more environmental conditions of the device, such as a state of motion of the device. In this way, devices may be automatically powered down and thus protected against unauthorized interception of signals from the device until one or more particular environmental conditions, such as a particular state of motion, are applied to the device. Additionally, or alternatively, devices may be automatically powered down, and thus battery power may be conserved, until one or more particular environmental conditions, such as a particular state of motion, are applied to the device. Additionally, or alternatively, devices may be automatically powered down, and thus protected against damage, in response to one or more particular environmental conditions, such as a particular state of motion, applied to the device.

In one aspect, there is provided a battery comprising: an electrical power supply portion configured to supply electrical power to a device connected to the battery; and a control portion configured to control a power output of the electrical power supply portion; wherein the control portion is configured to control the power output of the electrical power supply portion based on a determined environmental condition of the battery. As will be described in more detail throughout this application, by providing a battery whose power output can be controlled based on its environmental condition (such as its state of motion), a power state or power supply for a large variety of existing and future devices can be controlled based on an environmental condition of the battery (i.e. environmental conditions surrounding the battery, environmental conditions experienced by the battery, or environmental conditions which the battery is subjected to), without the need to modify the devices. For example, existing keyless entry devices can be retrofitted with a battery in accordance with the invention, enabling those devices to be automatically powered down and protected against relay attacks, or other such attacks, when the device is not in use, without the need for further modifications to the keyless entry device. In particular, when a device is powered down, it is no longer possible for the device to transmit or send messages which could otherwise have potentially been relayed and/or recorded by an unauthorized third party.

The determined environmental condition of the battery may be a determined state of motion of the battery. This means that power to a device can be automatically controlled depending on how the device is moved by a user, or on how the device is moved by its surroundings or environment, without the need to modify the device.

The determined environmental condition of the battery may be a determined magnetic field strength of a magnetic field surrounding the battery. This means that power to a device can be automatically controlled depending on its proximity to a magnet or particular magnetic field, without the need to modify the device.

The electrical power supply portion and the control portion may be contained in a housing of the battery. This allows the battery to be small and compact, and enables the battery to be compatible with a large variety of devices as it is able to be installed in those devices using their existing battery casing, housing, cavity, recess, port, or the like.

The control portion may be configured to determine a state of motion of the battery based on acceleration data obtained for the battery. As will be described in more below, acceleration data can be manipulated or analyzed in a number of different ways to determine one or more states of motion for the battery. A state of motion of the battery can therefore be determined for a number of different movements (including stationary, i.e. no movement) of the battery, which may be updated as use of the battery changes. This means the power supplied to a device can be adapted or updated based on a use of the device, to enable it to be automatically protected against relay attacks, or the like.

The control portion may be configured to analyze the acceleration data to determine the state of motion of the battery. This can enable the battery to operate without input from other external devices or components outside the battery. In other words, the battery may be an independent or stand-alone system for controlling power to a device based on a determined state of motion of the battery.

The control portion may be configured to control the power output of the electrical power supply portion between on and off states based on the determined environmental condition of the battery. This can enable the battery to selectively power down a device depending on its state of motion, thereby automatically protecting it against relay attacks, or the like.

The control portion may comprise one or more of a switching means, a processing means, and a sensing means. These features can further enable the battery to operate as an independent or stand-alone system for controlling power to a device based on a determined state of motion of the battery.

Preferably, at least one of: the switching means comprises a solid state switch; the sensing means comprises an accelerometer; or the processing means comprises a microcontroller. These components can be readily available, and may be provided with a small footprint (i.e. these components can have small dimensions and/or do not necessarily require much space). This can enable the battery to be compact and cost-effective, further enabling its use with a variety of existing and future devices.

The control portion may further comprise a control portion power supply. The control portion may therefore be able to power itself, further enabling the battery to operate as an independent or stand-alone system for controlling power to a device based on a determined environmental condition of the battery.

The control portion power supply may be configured to receive power from the electrical power supply portion, optionally wherein the electrical power supply portion is configured to supply power to the control portion power supply independently of the power it supplies to the device. The control portion may therefore make use of the construction of the battery itself to power its operations or functions, thereby avoiding the need for an external source of power (e.g. from components outside the battery). This may further enable the battery to be small and compact and thus compatible with a variety of existing and future devices. Moreover, the independence of power supplied to the control portion and power supplied to the device can enable the battery to supply power to the control portion even when the battery is not supplying power to the device.

In another aspect, there is a battery control device for controlling a battery installed in a battery casing of a device, the battery control device comprising a control portion configured to control a power output of the battery based on a determined environmental condition of the battery. As will be described in more detail throughout this application, by providing a battery control device for controlling a battery installed in a battery casing (or battery housing, battery cavity, battery recess, battery port, or the like) of a device, a power state or power supply for a large variety of existing and future devices can be controlled based on an environmental condition of the battery, without the need to modify the devices or its batteries / the batteries it operates with. For example, existing keyless entry devices can be retrofitted with a battery control device in accordance with the invention, enabling those devices to be automatically powered down and protected against relay attacks, or other such attacks, when the device is not in use, without the need for further modifications to the keyless entry device or its battery / batteries.

The determined environmental condition of the battery may be a determined state of motion of the battery. As above, this means that power to a device can be automatically controlled depending on how the device is moved by a user, or on how the device is moved by its surroundings or environment, without the need to modify the device.

The determined environmental condition of the battery may be a determined magnetic field strength of a magnetic field surrounding the battery. As above, this means that power to a device can be automatically controlled depending on its proximity to a magnet or particular magnetic field, without the need to modify the device.

The control portion of the battery control device may be configured to determine a state of motion of the battery based on acceleration data obtained for the battery. As above, acceleration data can be manipulated or analyzed in a number of different ways to determine one or more states of motion for the battery. A state of motion of the battery can therefore be determined for a number of different movements (including stationary, i.e. no movement) of the battery, which may be updated as use of the battery changes. This means the power supplied to a device can be adapted or updated based on a use of the device, to enable it to be automatically protected against relay attacks, or the like.

The control portion of the battery control device may be configured to analyze the acceleration data to determine the state of motion of the battery. This can enable the battery control device to operate without input from other external devices or components outside the battery control device. In other words, the battery control device may be an independent or stand-alone system for controlling power to a device based on a determined environmental condition (such as a determined state of motion) of a battery.

The control portion of the battery control device may comprise one or more of a switching means, a processing means, and a sensing means. These features can further enable the battery control device to operate as an independent or stand-alone system for controlling power to a device based on a determined environmental condition of a battery.

In another aspect, there is a device comprising the battery or the battery control device described above.

In another aspect, there is a method of controlling a power output of a battery, the method comprising: determining, by a control portion, an environmental condition of the battery; and controlling, by the control portion, a power output of the battery based on the determined environmental condition. As will be described in more detail throughout this application, by controlling a power output of a battery based on its environmental condition (such as its determined state of motion), a power state or power supply for a large variety of existing and future devices can be controlled based on an environmental condition of the battery, without the need to modify the devices. For example, existing keyless entry devices can be controlled with the method of the invention to be automatically powered down and protected against relay attacks, or other such attacks, when the device is not in use, without the need for further modifications to the keyless entry device.

### BRIEF DESCRIPTION OF THE FIGURES

Embodiments of the invention will now be described, by way of example only, with reference to the accompanying drawings, in which:
Figure 1a illustrates a battery as described herein.
Figure 1b illustrates a device comprising the battery of figure 1a.
Figure 2 schematically illustrates details of the battery of figures 1a and 1b.
Figure 3a illustrates a battery and battery control device described herein.
Figure 3b illustrates a device comprising the battery and battery control device of figure 3a.
Figure 4 schematically illustrates details of the battery and battery control device of figures 3a and 3b.
Figure 5 schematically illustrates an example of a processing system which may be used in implementing the battery and/or battery control device as described in figures 1a, 1b, 2, 3a, 3b, and 4.
Figure 6 is a flow diagram schematically illustrating an example method for controlling a power output of a battery using the battery illustrated in figures 1a, 1b, and 2, and/or the battery control device illustrated in figures 3a, 3b, and 4.

### DETAILED DESCRIPTION

In the description that follows, and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the scope of the invention as set forth in the appended claims.

### General Configuration of the Battery

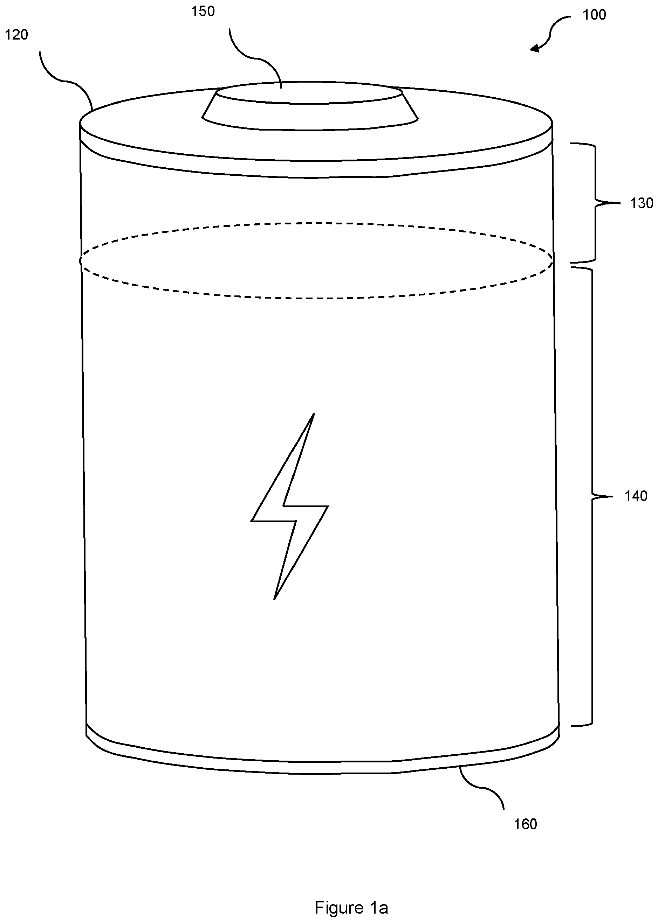

Figure 1a illustrates a battery or cell 100 comprising an electrical power supply portion 140 and a control portion 130. The battery may also comprise a housing 120 to house or contain the electrical power supply portion 140 and/or the control portion 130. The battery may also comprise a first cap 150, and a second cap 160. The first cap 150 and/or the second cap 160 may form part of the housing 120. As such, the present invention may be provided within the footprint or dimensions of a standard battery, such as one of the types of battery described in more detail below, thereby enabling the invention to be implemented in a large variety of existing and future devices.

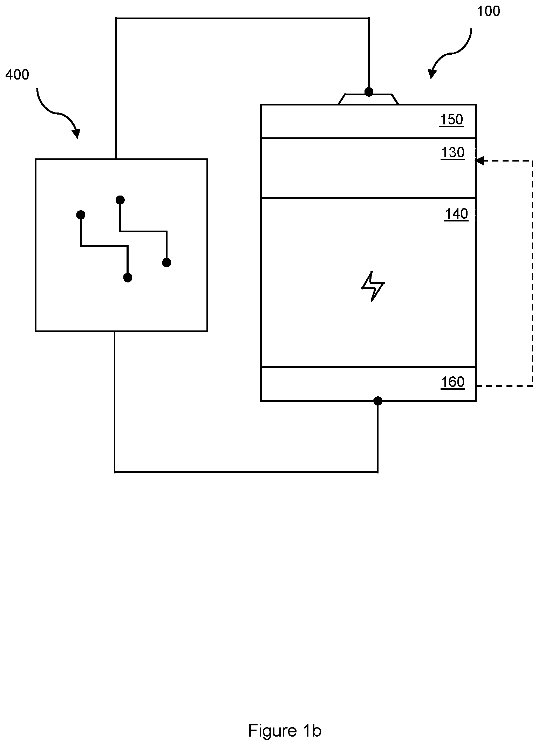

Figure 1b illustrates the battery 100 being connected to or comprised by a device or circuit 400 in use. The device 400 may be, for example, an item of consumer electronics such as a key fob, remote control, portable electronic device, or the like. The battery 100 may be connected to the device 400 through battery receiving means provided in the device 400, such as a battery casing, housing, cavity, recess, or port. The device 400 may comprise one or more terminals for connecting to (and optionally retaining) the battery, such as one or more electrical terminals provided in a battery casing of the device 400. However, it will be appreciated that the battery 100 may be used with any of a large variety of devices which operate on or with (or function with / run on) batteries.

In use, the electrical power supply portion 140 of the battery 100 is configured to supply electrical power or energy to the device 400. In other words, the electrical power supply portion 140 is a source of power for a device 400 which may be connected to the battery 100 in use. However, it will be appreciated that supplying or controlling power to/from the electrical power supply portion 140 may be equated with supplying to/power from the battery 100 more generally. As such, supplying or controlling power to/from the electrical power supply portion 140 may be used interchangeably with supplying or controlling power to/from the battery 100.

In order to generate or produce electrical power or energy, the battery 100, and in particular the electrical power supply portion 140, may comprise one or more electrochemical cells. The one or more electrochemical cells may include, for example, a galvanic cell, an electrolytic cell, a fuel cell, a flow cell, a voltaic pile, or any combination thereof.

The battery 100 may be a dry cell battery or a wet cell battery. The battery 100 may be a primary (single use, non-rechargeable) battery, or a secondary (multiple use, rechargeable) battery. For example, the battery 100 shown in figures 1a and 1b has the appearance of a cylindrical dry cell type battery, such as a D cell, C cell, AA cell, AAA cell, or the like. However, it will be appreciated that the battery 100 could be configured as a different type of battery, for example, a button cell or PP3 type battery. It will also be appreciated that the battery 100 could be configured to have one of any number of suitable voltages or currents, depending on the device or electrical circuit 400 with which it is intended to be used.

The first cap 150 may be a positive terminal (cathode) of the battery 100, and the second cap 160 may be a negative terminal (anode) of the battery 100. Alternatively, the first cap 150 may be a negative terminal (anode) of the battery 100, and the second cap 160 may be a positive terminal (cathode) of the battery 100. The first cap 150 and the second cap 160 may act as a seal or cap for the battery housing 120. Additionally, or alternatively, one or both of the first cap 150 and the second cap 160 may be integrated with the control portion 130. Additionally, or alternatively, one or both of the first cap 150 and the second cap 160 may be integrated with the electrical power supply portion 140.

### Controlling a Power Supply of the Battery

The control portion 130 is configured to control a power output of the electrical power supply portion 140. By controlling a power output of the electrical power supply portion 140 (that is to say the electrical power or energy output by the electrical power supply portion 140) it will be understood that the control portion 130 may be considered to control the electrical power output, voltage, or current of the battery 100.

Controlling a power output of the electrical power supply portion 140 may include selectively altering or modifying a power output, current, or voltage of the electrically supply portion 140. For example, controlling a power output of the electrical power supply portion 140 may include selectively reducing a power output, current, or voltage of the electrical power supply portion 140, for example from a non-zero value to a zero value, thereby switching from an "on" state of the battery 100 to an "off" state of the battery 100. Additionally, or alternatively, controlling a power output of the electrical power supply portion 140 may include selectively increasing a power output, current, or voltage of the electrical power supply portion 140, for example from a zero value to a non-zero value, thereby switching from an "off" state of the battery 100 to an "on" state of the battery 100. Additionally, or alternatively, controlling a power output of the electrical power supply portion 140 may include selectively altering a power output, current, or voltage of the electrical power supply portion 140, for example from a first non-zero value to a second non-zero value, thereby switching from a first power state of the battery 100 to a second power state of the battery 100.

In view of the discussion above, controlling a power output of the electrical power supply portion 140 may involve switching between "on" and "off" states of the electrical power supply portion 140, and thus "on" and "off" states of the battery 100. Naturally, "on" and "off" are not the only states of the battery 100 that could be selected or switched between, and the power output, voltage, or current of the electrical power supply portion 140 may be controlled to take any suitable value within the limits of its physical configuration. For example, a voltage of the electrical power supply portion 140 could be controlled between a first non-zero value and a second non-zero value, such as from 3 volts to 2 volts, or from 2 volts to 3 volts. These voltages are only examples, and it will be appreciated that any other suitable power, voltage, or current values could be used instead.

It will be appreciated from the discussion above that controlling the power output of the electrical power supply portion 140 can amount to controlling the power output of the battery 100, and thus the power delivered to a device 400 comprising the battery 100. For example, if the power output of the electrical power supply portion 140 is zero, then the power supplied to a device 400 connected to the battery 100 may also be zero. As such, the battery 100 may be configured to power down the device 400, or otherwise alter its state of power, in order to protect the device 400 from possible relay attacks, or other such attacks.

In particular, in a powered down state (which may be, for example, an "off" state, or a relatively low power state of the device compared to its usual operating power), the device may be unable to send and/or receive signals, transmissions, or messages. As such, a potential attacker would be unable, for example, to trigger or cause a response or transmission from the device (e.g. as part of a relay attack). Similarly, the device would be unable, for example, to send any signals, transmissions, or messages which could otherwise have been received by a potential attacker (e.g. as part of a relay attack).

### Introducing a State of Motion

In use, it will be appreciated that the battery 100 may go from being static (i.e. stationary, not moving) to moving or in motion. This may be the result of a user picking up the battery 100, or a device 400 in which the battery 100 is installed or connected.

It will be appreciated that motion of the battery 100 may result in motion of the components of the battery 100, such as the power supply portion 140 and the control portion 130. Similarly, motion of a device 400 or circuit comprising the battery 100 in use may result in motion of the battery 100. Thus, motion (or a state of motion described below) of the battery 100 could refer to motion (or a state of motion) of any of the battery's components, the battery 100 itself, or a device / circuit 400 comprising the battery 100.

Motion or movement of the battery 100 may be of a particular state or pattern, depending on what has caused the motion of the battery 100. A state of motion of the battery 100 may comprise or cause one or more accelerations or velocities of the battery 100, which may be characteristic or indicative of that state of motion. These accelerations or velocities may be, for example, random, periodic, or non-random or predefined in nature.

In a first exemplary state of motion, a user picks up a device 400 comprising the battery 100 and places it in their pocket before proceeding to walk around their local environment. As a result, the device 400 (and thus the battery 100) is accelerated from rest up to a walking speed of the user. The device 400 may then move about in a user's pocket, which may result in both periodic acceleration(s) of the battery 100 as the device oscillates in synchronization with the user's gate, and random acceleration(s) of the battery 100 as the device 400 bounces around in the user's pocket. One or more of these accelerations may be used to characterize (that is to say define, label, identify, or describe) a state of motion of the battery 100.

In a second exemplary state of motion, a device 400 comprising the battery 100 is located on a user as they walk around their local environment. As a result, the battery 100 is subject to both periodic acceleration(s) as the device oscillates in synchronization with the user's gait, and random acceleration(s) as the device 400 bounces around in the user's pocket. One or more of these accelerations may be used to characterize a state of motion of the battery 100.

In a third exemplary state of motion, a user holds a device 400 comprising the battery 100 in their hand and moves the device 400 along or about predefined path, or makes predefined gesture, such as moving the device 400 in a small circle out in front of their body. As a result, the battery 100 may undergo substantial non-random or predefined acceleration(s). One or more of these accelerations may be used to characterize a state of motion of the battery 100.

In a fourth exemplary state of motion, a user picks up a device 400 comprising the battery 100 and holds it in their hand or against their chest. As a result, the battery 100 may experience acceleration(s) correlated with or corresponding to a pulse or heartbeat of the user. One or more of these accelerations may be used to characterize a state of motion of the battery 100.

In a fifth exemplary state of motion, a user takes a device 400 comprising the battery 100 from about their person and places it on a static object such as a table or dresser. As a result, the battery 100 may go from being subject to both periodic acceleration(s) as the device 400 oscillates in synchronization with the user's gait, and random acceleration(s) as the device 400 bounces around in the user's pocket, to being decelerated back to rest. One or more of these accelerations may be used to characterize a state of motion of the battery 100.

As can be seen from the examples above, a state of motion may comprise a number of different motions, accelerations, sets of accelerations, or acceleration events, at least one of which can be used to characterize a state of motion of the battery 100. By determining one or more of these states of motion, the power output of the battery 100 can be altered in response to a number of different states of motion of the battery, which may involve switching between different power outputs as a state of motion of the battery 100 changes during use.

Of course, these are just some examples of possible states of motion of the battery 100. It will be appreciated that there are many other possible states of motion that the battery 100 may experience or be characterized as having, depending, for example, on the activities of the user or the nature of the device 400 in which the battery 100 may be installed.

It will be appreciated from the discussion above that a state of motion of the battery 100 may change during use. In other words, the battery 100 may go through a number of phases or stages of use. For example, the battery 100 may first be at rest in a user's home, then it may be in motion after being picked up by a user, and then it may be returned to rest. In each phase or stage of use, the battery 100 may have a current state of motion, representing the current use or environment of the battery 100. It may be this current state of motion of the battery 100 which is determined, and thus this current state of motion of the battery 100 on which control of the power supply portion 140 (and thus power of the battery 100) is based.

In view of the above, it will be understood that the power output of a device 400 comprising the battery 100 may be changed or updated during different states of motion, enabling the device 400 to be automatically powered down and thus protected against relay attacks, or other such attacks, depending on an activity of the user and/or device 400.

Although a state of motion of the battery 100 is described in detail herein, it will be appreciated that a number of other environmental conditions of components of the battery 100, the battery 100, or a device or circuit 400 comprising the battery 100, could be used in controlling a power output of the power supply portion 140. Such environmental conditions include temperature, geographic location, humidity, altitude, magnetic field, pressure, or the like. These may be alternatives to the state of motion, or may be combined with the state of motion to control the power output of the electrical power supply portion 140, and thus the battery 100. These other environmental conditions may be determined analogously to the determination of a state of motion as described herein.

### Determining a State of Motion

Determination of a state of motion of the battery 100 may be carried out by the control portion 130. For example, the control portion 130 may be configured to measure or monitor movement of the battery 100 in order to determine a state of motion of the battery 100. Such monitoring and/or determination may be continuous, periodic, or a mix of continuous and periodic. For example, the control portion 130 may periodically monitor movement of the battery 100 in order to determine or update a state of motion of the battery 100, to thereby provide a current state of motion of the battery 100. In another example, the control portion 130 may continuously monitor movement of the battery 100 to check for changes or updates in a state of motion of the battery 100. In any case, the control portion 130 may be configured to sample movement (e.g. accelerations) of the battery 100 and/or determine a state of motion of the battery 100 at a particular sample rate, such as once every 1/100 of a second, every 1/10 of a second, every second, every minute, or every hour. These are just example sample rates, and it will be appreciated that any suitable sample rate could be chosen. The sample rate may also be adapted or changed during use, for example to minimize energy consumption and/or maximize battery life.

The control portion 130 may determine (e.g. calculate, evaluate, compute or assess) a state of motion of the battery 100 based on, for example, one or more measured accelerations of the battery 100 or a device 400 in which the battery 100 is installed. For instance, as will be described in more detail below, the control portion 130 may be configured to compare measured accelerations of the battery 100 against one or more predefined accelerations or patterns of acceleration to determine a state of motion of the battery 100.

Alternatively, or in addition, the control portion 130 may receive (e.g periodically or continuously) a determination of a state of motion of the battery 100, for example from another component of a device 400 in which the battery 100 is installed. More specifically, the control portion 130 may receive a determination of a state of motion of a device 400 comprising the battery 100 (and by extension a state of motion of the battery 100) via a wired connection or a wireless communication protocol such as Bluetooth, Bluetooth Low Energy (BLE), WiFi, NFC, Zigbee, ANT, or other suitable wireless communication protocols. In that regard, the control portion 130 may be configured with a wireless communications module to enable such communications.

Alternatively, or in addition, the control portion 130 may receive data in relation to acceleration or velocity of a device 400 comprising the battery 100 (and by extension acceleration or velocity of the battery 100) via a wired connection or a wireless communication protocol such as Bluetooth, Bluetooth Low Energy (BLE), WiFi, NFC, Zigbee, ANT, or other suitable wireless communication protocols. The control portion 130 may then determine a state of motion of the battery 100 based on this received data, for example by comparing the received data against one or more predefined accelerations or patterns of acceleration to determine a state of motion of the battery 100, as will be described in more detail below.

Although set out above for a state of motion of the battery 100, it will be appreciated that other environmental conditions, such as those set out above, may be determined analogously.

### Controlling Power Based on a State of Motion

Depending on the determined state of motion, the control portion 130 can control a power output of the electrical power supply portion 140. For example, if the determined sate of motion is of a particular type or if the determined state of motion comprises a particular value or acceleration event, the control portion 130 may adjust a power output of the electrical power supply portion 140. Alternatively, if the determined sate of motion is of a particular type or if the determined state of motion comprises a particular value or acceleration event, the control portion 130 may take no action and thereby maintain the current power output of the electrical power supply portion 140 (e.g. if there is no change to the state of motion).

In one example, the determined state of motion may be characteristic of a device 400 comprising the battery 100 being at rest inside a user's home. Based on this determined state of motion, the control portion 130 may control the power output of the electrical power supply portion 140 to be zero (i.e. an "off" state for the battery 100 and thus the device 400). The control portion 130 may maintain this power output of the electrical power supply portion 140 (i.e. an "off" state for the battery 100 and thus the device 400) until the device 400 is determined to be in a different state of motion. Thus, the device 400 will be protected against relay attacks, or other such attacks, while the device 400 is stored in a user's home or otherwise not in use. Additionally, or alternatively, the power of the battery 100 can be automatically conserved through being automatically switched off when the device 400 is at rest, prolonging the operational lifespan of the device 400.

In another example, the determined state of motion may be characteristic of a device 400 comprising the battery 100 being moved in a predefined pattern by the user. Based on this determined state of motion, the control portion 130 may switch the electrical power supply portion 140 from an "off" state to an "on" state, thereby enabling power to be supplied to the device 400. The control portion 130 may maintain this power output of the electrical power supply portion 140 (i.e. an "on" state for the battery 100 and thus the device 400) until the device 400 is determined to be in a different state of motion, at which point the control portion 130 may control the electrical power supply portion to return to the "off" state. Alternatively, the control portion 130 may maintain the "on" state of the electrical power supply portion 140 for a period of time, before returning the electrical power supply portion to an "off" state. This period of time may be, for example, up to 10 minutes, up to 1 minute, or up to 10 seconds. Thus, the device 400 will be powered up for use after being moved by the user, and then automatically returned to a powered down state to protected against relay attacks, or other such attacks, after the device 400 has been used.

In another example, the determined state of motion may be characteristic of a device 400 comprising the battery 100 being moved unexpectedly or outside of its normal operating conditions (for example if the device 400 was a sensitive piece of electronic equipment that needed to be kept still or only moved gently, but which was suddenly subject to relatively large or violent acceleration). Based on this determined state of motion, the control portion 130 may control the power output of the electrical power supply portion 140 to be zero (i.e. an "off" state for the battery 100 and thus the device 400). The control portion 130 may maintain this power output of the electrical power supply portion 140 (i.e. an "off" state for the battery 100 and thus the device 400) until the device 400 is determined to be in a different state of motion (e.g. returned to a static condition). Thus, the device 400 can be automatically powered down or turned off and protected against damage when subject to sudden or unexpected movement.

### Other Environmental Conditions

As mentioned above, other environmental conditions may be used to control a power output of the electrical power supply portion. These other environmental conditions may be used in addition to the state of motion to control a power output of the electrical power supply portion 140, or they may be an alternative means for controlling a power output of the electrical power supply portion 140. Again, it will be understood that an environmental condition of the battery can include a condition or force to which the battery 100 is subjected (such as a state of motion applied to the battery 100, for example), or a condition of the immediate surroundings of the battery 100 (such as a magnetic field surrounding the battery, or a temperature in the vicinity of the battery 10, for example).

In one example, a magnetic field strength is determined for the battery 100 (that is to say the magnetic field strength in a region close to or around the battery 100, or in the vicinity of the battery 100, is determined). This may be determined by the control portion 130, for example using a magnetic field senor included in the control portion 130. Alternatively, the control portion 130 may obtain the magnetic field strength of the battery 100 from another source.

If the determined magnetic field strength is used in addition to determining a state of motion, then the control portion 130 may adjust a power output of the electrical power supply portion 140 if the determined state of motion and the determined magnetic field strength are of a particular value or pattern. For example, the battery 100 may need to be moved in a predefined pattern inside a magnetic field of a particular strength before the control portion 130 will switch the electrical power supply portion 140 from an "off" state to an "on" state, thereby enabling power to be supplied to the device 400.

If magnetic field strength is used as an alternative to determining a state of motion of the battery 100, then if a magnitude or size of the determined magnetic field strength is above a certain value, the control portion 130 may adjust a power output of the electrical power supply portion 140. For example, the battery 100 may need to be in the presence of (or placed or positioned in) a magnetic field of at least a particular strength before the control portion 130 will switch the electrical power supply portion 140 from an "on" state to an "off" state, thereby enabling the device 400 to be automatically powered down when in the presence of a particular magnetic field. In one scenario, a user may have a magnet in their home, and will place a device 400 in close proximity to this magnet when the device 400 is not in use. This can ensure the device 400 is automatically powered down and thus protected against relay attacks, or other such attacks, when the device 400 is not in use.

Alternatively, the battery 100 may need to be in the presence of (or placed or positioned in) a magnetic field of at least a particular strength before the control portion 130 will switch the electrical power supply portion 140 from an "off" state to an "on" state, thereby enabling the device 400 to be automatically powered up when in the presence of a particular magnetic field.

In view of the above, it will be apparent how controlling power based on a state of motion may be applied analogously to controlling power based on magnetic field strength. Moreover, it will be also apparent how other environmental conditions (such as temperature, geographic location, humidity, altitude, pressure, or the like) can be used in conjunction with, or as alternatives to, the determined state of motion when it comes to controlling power output of the battery 100. For example, a determined temperature of the battery 100, the device 400, or their surroundings could be used analogously to magnetic field strength in the examples above. Similarly, a determined absolute or relative position of the battery 100 or the device 400 could be used analogously to magnetic field strength in the examples above. Similarly, a determined pressure applied to the battery 100 or the device 400 could be used analogously to magnetic field strength in the examples above. Similarly, a determined humidity of the battery 100, the device 400, or their surrounding could be used analogously to magnetic field strength in the examples above. Similarly, a determined altitude of the battery 100 or the device 400 could be used analogously to magnetic field strength in the examples above.

### Configuration of the Control Portion

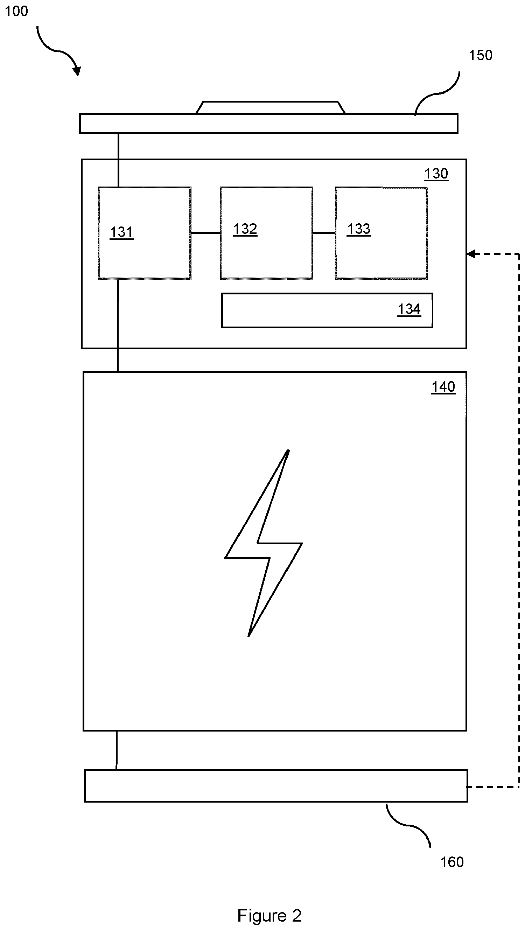

As shown in figure 2, the control portion 130 may comprise a number of components (e.g. electrical or mechanical) to enable it to control the power output of the electrical power supply portion 140 and/or determine a state of motion of the battery 100. These may include a switching means 131, a processing means 132, a sensing means 133, and a control portion power supply 134, each of which will be discussed in more detail below. Although in figure 2 the control portion 130 is shown adjacent and connected to the first cap 150, it will be appreciated that the control portion 130 may be positioned adjacent and connected to the second cap 160, or indeed located at any other suitable location in the battery 100.

### The Switching Means

The switching means 131 may be configured to enable the control portion 130 to selectively control a flow of electrical power through or from the battery 100. For example, the switching means 131 may be electrically connected to the first cap 150 and the electrical power supply portion 140 to thereby provide a switchable electrical connection between the first cap 150 and the electrical power supply portion 140. The switching means 131 is therefore able to control an electrical connection between the power supply portion 140 and the first cap 150, thereby enabling the power output of the power supply portion 140 (and thus the battery 100) to be controlled. As mentioned above, the switching means 131 may alternatively be electrically connected to the second cap 160 and the electrical power supply portion 140 to thereby provide a switchable electrical connection between the second cap 160 and the electrical power supply portion 140. Alternatively, the switching means 131 may comprise the first cap 150 and/or the second cap 160.

The switching means 131 may comprise a solid state switch. For example, the switching means 131 may comprise at least one of: one or more bipolar transistors, one or more metal oxide semiconductor field effect transistors (MOSFETs), one or more power diodes, one or more insulated gate bipolar transistors (IGBTs), one or more silicon controlled rectifiers (SCRs), or any combination thereof. This can allow the switching means 131 to be controlled by a voltage or current, delivered or controlled for example by the processing means 132 or another component of the battery 100.

Additionally, or alternatively, the switching means 131 may comprise a mechanical switch. For example, the switching mean 131 may comprise at least one of: one or more single-pole-single-throw (SPST) switches, one or more single-pole-double-throw (SPDT) switches, one or more double-pole-single-throw (DPST) switches, one or more double-pole-double-throw (DPDT) switches, one or more toggle switches, one or more push-button switches, one or more solenoid switches, or any combination thereof. This can allow for manual actuation of the switching means 131, for example by the user.

As will be discussed below, the switching means 131 may be controlled by the processing means 132.

### The Sensing means

The sensing means 133 (for example a sensor or plurality of sensors) may be configured to enable the control portion 130 to measure or detect one or more environmental conditions of the battery 100. For example, the sensing means 133 may comprise one or more motion detectors, such as one or more accelerometers, to measure one or more accelerations and/or velocities of the battery 100 along one or more axes. As described above, these measured accelerations and/or velocities may be used to determined a state of motion of the battery 100. The one or more accelerometers may comprise a chip-mounted accelerometer, such as a micro-electro-mechanical systems (MEMS) accelerometer, thereby enabling the dimensions of the control portion 130 (and thus the battery 100) to be compact and thus conform to the dimensions of a standard battery.

Additionally, or alternatively, the sensing means 133 may comprise one or more environmental sensors, such as at least one temperature sensor, at least one location or position sensor (such as a GPS sensor, GPS unit, or GPS module), at least one humidity sensor, at least one altitude sensor, at least one magnetic field sensor, or at least one pressure sensor. As described above, measurements from (or made by) these environmental sensors may be used in conjunction with, or as an alternative to, the determined state of motion to control a power output of the battery 100.

The sensing means 133 may comprise a sensing means storage module (not shown) and/or a sensing means processing means (not shown). The sensing means storage module may be configured to store data measured or collected by one or more accelerometers and/or other environmental sensors of the sensing means 133. Additionally, or alternatively, data from the sensing means 133 may be stored on the processing means 132. Processing of data measured or collected by the sensing means 133 may be carried out by the sensing means processing means and/or by the processing means 132.

As will be described in more detail below, the control portion 130 may use the measured acceleration(s) obtained by the sensing means 133 in determining a state of motion of the battery 100.

### The Processing Means

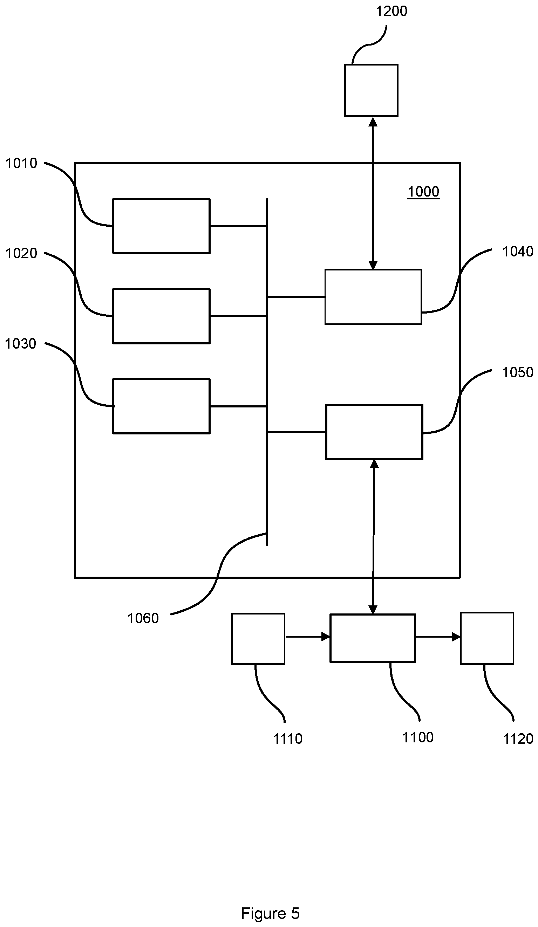

The processing means 132 may be provided to control and coordinate various components, modules, or processes of the control portion 130. Preferably, the processing means 132 comprises a microcontroller or microprocessor, thereby enabling the dimensions of the control portion 130 (and thus the battery 100) to be compact and thus conform to the dimensions of a standard battery. Preferably, the processing means 132 comprises at least one memory to store, for example, acceleration data for the battery 100 or a device 400 comprising the battery 100. As will be discussed in more detail below, the processing means 132 may comprise a processing system 1000 (see figure 5) to implement the functionality described below.

One of the control and coordination functions of the processing means 132 may be that of determining an environmental condition (such as a state of motion) of the battery 100. To carry out this function, the processing means 132 may be configured to obtain data in relation to one or more environmental conditions of the battery 100, such as acceleration data for the battery 100. For example, the processing means 132 may receive measured acceleration data for the battery 100 from the sensing means 133. Additionally, or alternatively, the processing means 132 may receive measured data in relation to one or more environmental conditions of the battery 100 (such as acceleration data for the battery 100) from another source, such as an accelerometer in a device 400 comprising the battery 100. The processing means 132 may be configured to process the obtained acceleration data to determine a state of motion of the battery 100.

In order to help understand the determination of an environmental condition of the battery 100, several examples of analyses performed by the control portion 130, and in particular the processing means 132, are set out below in relation to determining a state of motion of the battery 100.

In one example, the processing means 132 is configured to compare obtained acceleration data for the battery 100 against one or more threshold values, which may characterize particular state(s) of motion of the battery 100. If one or more accelerations or acceleration events in the obtained acceleration data cross at least one of the one or more threshold values, then the processing means 132 may determine the battery 100 to be in a particular state of motion. For instance, if the obtained acceleration data for the battery 100 comprises a spike or transient of 1g (approximately 9.8ms⁻²) of acceleration, the processing means 132 may determine the battery 100 to be in a state of motion associated with being picked up by a user.

In another example, the processing means 132 is configured to look for patterns in the obtained acceleration data for the battery 100, which may characterize particular state(s) of motion of the battery 100. If there is found to be a particular pattern in the obtained acceleration data, then the processing means 132 may determine the battery 100 to be in a particular state of motion. For instance, if there is found to be periodic positive and negative acceleration on a single axis of the battery 100, then the processing means 132 may determine the battery 100 to be in a state of motion associated with being in a pocket of a user. It will be appreciated that there are a number of ways the processing means 132 could be configured to look for patterns, such as by making use of pattern recognition algorithms or the like.

In another example, the processing means 132 is configured to compare the obtained acceleration data against one or more sets of acceleration data stored on the data processing means 132, which may characterize particular state(s) of motion of the battery 100. If the comparison shows the obtained acceleration data to be similar to that of one of the stored sets of acceleration data, then the processing means 132 may determine the battery 100 to be in a particular state of motion characterized by the stored set of acceleration data. For instance, if the obtained acceleration data comprises a set of accelerations which are similar to a stored set of acceleration data associated with a user making a particular gesture with the battery 100 in (e.g. moving the battery 100 in a circular or figure-of-eight motion), then the processing means 132 may determine the battery 100 to be in a state of motion associated with being moved in a particular gesture by a user. It will be appreciated that there are a number of ways the processing means 132 could be configured to assess a similarity between acceleration data, such as by making use of similarity, best-fit algorithms, or the like.

There may be a temporal aspect to the analysis of the obtained acceleration data to determine a state of motion of the battery 100. For example, the analysis of acceleration data obtained for the battery 100 by the processing means 132 may take into account only accelerations of the battery 100 from the last 60 seconds or less. This helps ensure the determined state of motion of the battery 100 is the current state of motion of the battery 100. However, it will be appreciated that the analysis may take into account acceleration data from any suitable time period in determining a state of motion of the battery 100.

The examples above of data processing or analysis carried out by the processing means 132 above are not necessarily mutually exclusive, and it will be appreciated that one or more of these techniques, or portions of these techniques, could be combined to enable the processing means 132 to determine a state of motion of the battery 100, or indeed another environmental condition of the battery 10.

Another of the control and coordination functions of the processing means 132 may be that of controlling the switching means 131, for example to control a power output of the power supply portion 140. To carry out this function, the processing means 132 may be configured to control or provide a supply of electrical power, voltage, or current to the switching means 131. For example, the switching means 131 may be a solid state switch, and the processing means 132 may be configured to control a bias voltage of the solid state switch, thereby controlling the state (e.g. "on" or "off") of the switching means 131.

The processing means 132 may control the switching means 131 to control a power output of the power supply portion 140 in response to the determination of a state of motion of the battery 100. For example, in response to determining a particular state of motion, the processing means 132 may change a state of the switching means 131 from an initial state to an altered state (e.g. from "open" to "closed", or vice-versa). This altered state of the switching means 131 may be maintained, for example, for a predetermined period of time and/or until a different state of motion of the battery 100 is determined. The state of the switching means 131 may then be changed again, e.g. to return to the initial state from the altered state.

With reference to the example analyses of the processing means 132 discussed above, in response to determining a particular state of motion of the battery 100, the processing means 132 may control the switching means 131 to control the power output of the power supply portion 140. For example, if the processing means 132 determines a current state of motion of the battery 100 to be associated with a user picking up the battery 100 or a device 400 comprising the battery 100, it may control the switching means 131 to enable power to flow through the battery 100, thereby taking the battery 100 from an "off" state to an "on" state. After a certain period of time, for example up to 60 seconds (although other periods of time could of course be used), the processing means 132 may then control the switching means 131 to inhibit power flow through the battery 100, thereby taking the battery 100 from an "on" state to an "off" state. In other words, in this example, the control portion 130 is configured to enable a device 400 comprising the battery 100 to be powered for a short period of time after being picked up by a user. The device 400 would be automatically powered down and thus protected from relay attacks, or other such attacks, when stationary, automatically powered up and ready for use when picked up by a user, and then automatically powered down again to be protect the device 400 against relay attacks, or other such attacks, shortly after use by the user.

Again with reference to the example analyses of the processing means 132 discussed above, if the processing means 132 determines a current state of motion of the battery 100 to be associated with a user moving the battery 100 or a device 400 comprising the battery 100 in a predefined gesture (such as a circular or figure-o-eight motion), it may control the switching means 131 to enable power to flow through the battery 100, thereby taking the battery 100 from an "off" state to an "on" state. The processing means 132 may control the switching means 131 to maintain the "on" state of the battery 100 for a short period of time (e.g. up to about 60 seconds, although other time periods could of course be used) and/or until a different state of motion is determined, for example when it is determined that the battery 100 is stationary or is undergoing random motion. In other words, in this example, the control portion 130 is configured to enable a device 400 comprising the battery 100 to be powered for a short period of time after being moved in a particular pattern or gesture by a user. The device 400 would then be automatically powered down and thus protected from relay attacks, or other such attacks, when stationary or being moved around randomly, automatically powered up and ready for use when moved in a particular pattern or gesture by a user, and then automatically powered down again to be protect the device 400 against relay attacks, or other such attacks, shortly after use and/or when a state of motion of the battery 100 changes back to random motion or a stationary state.

### Powering the Control Portion

In order to provide electrical power to the components of the control portion 130, the control portion 130 may be configured to draw power (in other words make use of power) from the battery 100, such as from the electrical power supply portion 140. For example, as shown by the dotted arrow in figure 2, the control portion 130 may be electrically connected to the second cap 160 (or another suitable element of the battery 100) to enable power to flow from the electrical power supply portion 140 into the control portion 130. This supply of electrical power from the electrical power supply portion 140 to the control portion 130 may be isolated from, or independent of, the electrical power supplied to a device 400 comprising the battery 100. This can enable the control portion 130 to be compact and thus the control portion 130 (and by extension the battery) can conform to the typical dimensions of a standard battery. This may also enable the battery 100 to supply different amounts of power to the control portion 130 and a device 400. For example, the control portion 130 may control the battery 100 to be in an "off" state with respect to the power delivered by the battery 100 to a device 400, while at the same time the control portion 130 itself may still able to draw power from the battery 100.

Alternatively, or in addition, the control portion 130 may comprise its own control portion power supply 134, independent of the electrical power supply portion 140. This may be, for example, a button cell integrated into the control portion 130. In some instances, this control portion power supply 134 may receive power from the battery 100.

### Battery Control Device

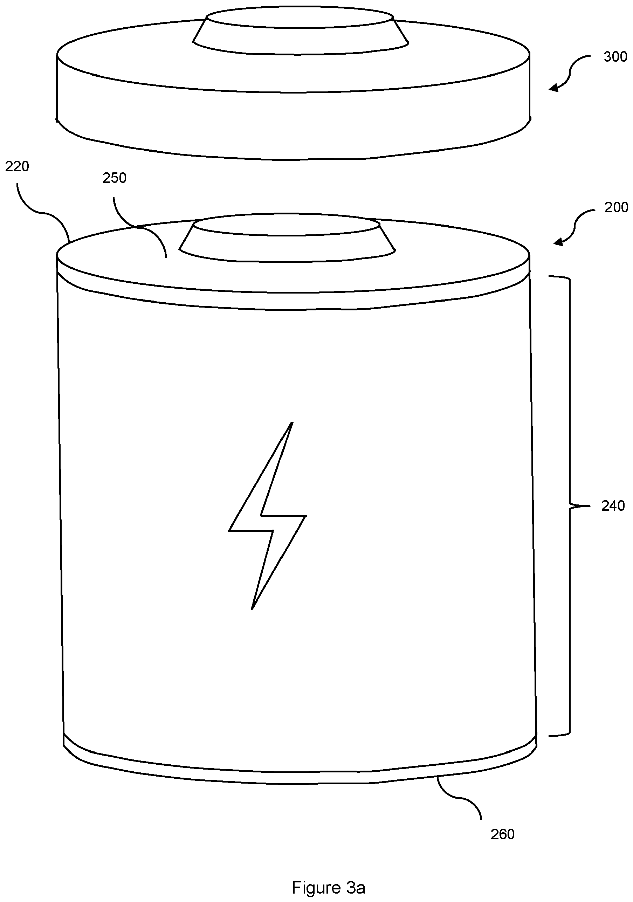

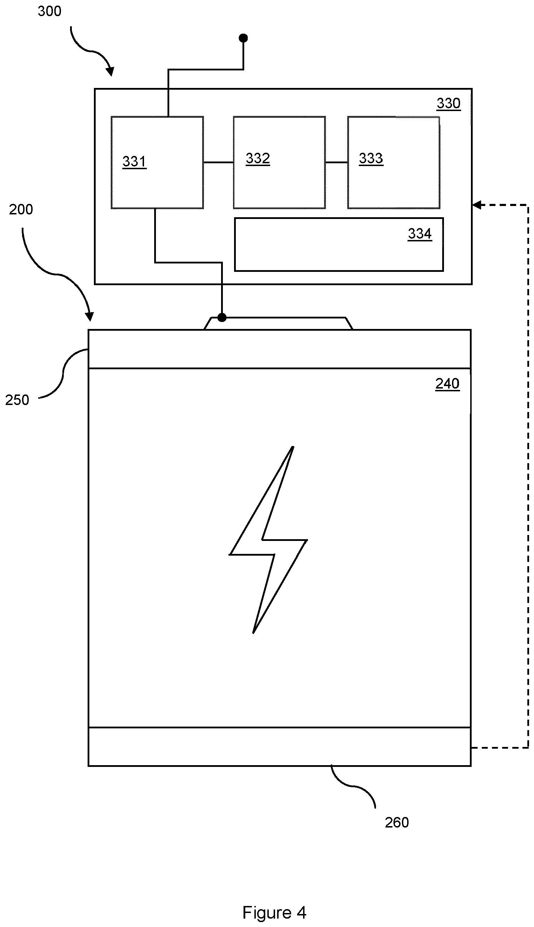

Figure 3a illustrates a separate or standalone battery control device 300, provided to control a power output of a battery 200. The battery 200 may comprises a power supply portion 240 and a housing 220. The battery 200 may also comprise a first cap 250, and a second cap 260. The first cap 250 and/or the second cap 260 may form part of the housing 220. The battery control device 300 comprises a control portion 330 (see figure 4), which may further comprise a switching means 331, a processing means 332, and sensing means 333. Although illustrated together, it will be appreciated that the battery 200 or the battery control device 300 may be provided separately. For example, the battery control device 300 may be used with other types of battery, such as any of those described above.

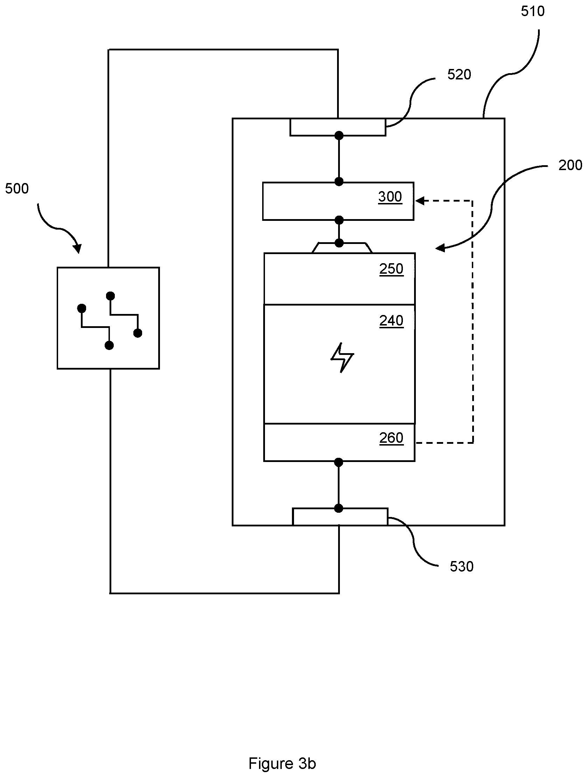

Figure 3b illustrates the battery 200 and battery control device 300 being connected to or comprised by a device or circuit 500 in use.

As shown in figure 4, the control portion 330 may comprise a number of components (e.g. electrical or mechanical) to enable it to control the power output of the electrical power supply portion 240 and/or determine an environmental condition (such as a state of motion) of the battery 200. These may include a switching means 331, a processing means 332, a sensing means 333, and a control portion power supply 334.

Reference numerals used in figures 3a, 3b, and 4 in relation to the battery 200, the power supply portion 240, the first cap 250, the second cap 260, the control portion 330, the switching means 331, the processing means 332, the sensing means 333, the control portion power supply 334, and the device 500 (or any other component) may represent the same or similar components as described with respect to figures 1a, 1b, and 2. Indeed, features of the battery 200, battery control device 300, and/or device 500 of figures 3a, 3b, and 4 may be the same or similar to correspondingly named features of the battery 100 described with respect to figures 1a, 1b, and 3.

Returning to figure 3b, as noted above, the device 500 may be the same or similar to the device 400 described above in relation to figures 1b and 2, and likewise the device 400 described above in relation to figures 1b and 2 may comprise features of the device 500 described below.

The device 500 may be, for example, an item of consumer electronics such as a key fob, remote control, portable electronic device, or the like. As will be described in more detail below, the battery 200 and/or battery control device 300 may be connected to the device 500 through a battery receiving means 510 provided in the device 500, such as a battery casing, housing, cavity, recess, or port. The device 500 may comprise one or more terminals 520, 530 for connecting to the battery 200 and/or battery control device 300, such as one or more electrical terminals provided in a battery casing 510 of the device 500. However, it will be appreciated that the battery 200 and/or the battery control device 300 may be used with any of a large variety of devices which operate on or with batteries. As such, the battery 200 and/or the battery control device 300 may be used to control power to a large number of existing and future devices.

The battery control device 300 is configured to control a power output of the battery 200 (or indeed any other type of battery), and thus to control a power output of a device 500 comprising the battery 200 (or any other type of battery) and battery control device 300. For example, the battery control device 300 may be selectively electrically connected to the battery 200 to enable it to control a flow of electrical power from or through the battery 200. In one sense, as will be described in more detail below, the battery control device 300 may be thought of as a shim or insert to be included in a battery casing 510 of a device 500, between the battery 200 and circuitry of the device 500. Alternatively, the battery control device 300 may the thought of as adapting the battery 200 to fit into a battery casing 510 of a device.

In use, the battery 200 and battery control device 300 may be inserted into a battery casing or battery housing 510 of a device 500 to provide electrical power to the device 500. The battery 200 may be of the type typically used to power the device 500, and may thus occupy a space reserved for it in the battery casing 510. Likewise, the battery control device 300 may be sized to occupy another space reserved for a battery in the battery casing 510. For example, if the device 500 usually takes two or more AAA-type batteries, the battery 200 may be a AAA-type battery and thus occupy one of the spaces in the battery casing 510 sized to accommodate a AAA-type battery. The battery control device 300 may then be sized to be received in another of the spaces in the battery casing 150 sized to accommodate a AAA-type battery. It will be understood that this example applies analogously to devices which operate on other types of battery, such as button cells.

Alternatively, the battery 200 may be some fraction of the size of a battery typically used to power a device, such that it occupies some fraction of a space in the battery casing 510 reserved for receiving batteries. The battery control device 300 may then be sized to be received in the remaining fraction of the space in the battery casing 510. For example, if the device usually takes a single AA-type battery, the battery 200 may be sized to be 2/3 the volume of an AA-type battery, and thus occupy 2/3 of the space in the battery casing 510 sized to accommodate the AA-type battery. The battery control device 300 may then be sized to be received in the remaining 1/3 of the volume of the space in the battery casing sized to accommodate the AA-type battery. For example, the battery control device 300 may be placed above or below the battery in the battery casing 510 (as illustrated in figure 3b), or it may partially or wholly surround the battery 200 in the battery casing 510. It will be understood that this example applies analogously to devices which operate on other types of battery, such as button cells.

The control portion 330 of the battery control device 300 may be configured analogously to the control portion 130 described above in relation to figures 1a, 1b and 2. As such, the switching means 331, processing means 332, and sensing means 333 of the control portion 330 of the battery control device 300 may be configured analogously to the switching means 331, processing means 332, and sensing means 333 described above in relation to figures 1b and 2. However, as will be described below, one way in which the control portion 300 of the battery control device 300 may differ from the control portion 130 described above in relation to figures 1a, 1b, and 2 relates to the switching means 331 of the battery control device 300.

In use, the switching means 331 of the battery control device 300 may be electrically connected to the first cap 250 and one or more electrical terminals 520, 530 in a battery casing 510 of a device 500 (e.g. a positive and/or negative electrical terminal in the battery casing 510 of the device), to thereby provide a switchable electrical connection between the first cap 250 and the terminal(s) 520, 530 of the device 500. These connections may comprise a wired connection, which may be provided by a push fit or interference fit electrical connection typically found in a battery casing 510. The switching means 331 of the battery control device 300 is therefore able to control an electrical connection between the battery 200 and the terminal(s) 520, 530 of a device 500, thereby enabling the power output of battery 200 (and thus power to the device 500) to be controlled. Analogously to what was mentioned above in relation to figures 1b and 2, the switching means 331 of the battery control device 300 may instead be electrically connected to the second cap 260.

Other aspects of the switching means 331 of the battery control device 300 may be as per the switching means 131 of figures 1b and 2 described above.

As described above in relation to the control portion 130 of figures 1a, 1b, and 2, the battery control device 300 of figures 3a, 3b, 4, for example the control portion 330 of the battery control device 300, may be configured to draw power from the battery 200, such as from the electrical power supply portion 240. For example, as shown by the dotted arrow in figure 4, the control portion 330 of the battery control device 300 may be electrically connected to the second cap 260 (or another suitable element of the battery 200, or indeed the device 500) to enable power to flow from the battery 200 (e.g. from the electrical power supply portion 240) into the control portion 330 of the battery control device 300. This supply of electrical power from the electrical power supply portion 240 to the control portion 330 of the battery control device 300 may be isolated from, or independent of, the electrical power supplied to a device 500 comprising the battery 200.

Alternatively, or in addition, the control portion 330 may comprise its own control portion power supply 334, independent of the battery 200. This may be, for example, a button cell integrated into the control portion 330. In some instances, this control portion power supply 334 may receive power from the battery 200.

### Exemplary Processing System

Figure 5 schematically illustrates an example of a processing system 1000 which may be used to implement the processing means 132, 332 as described herein. The processing system 1000 comprises: a storage medium 1010, a memory 1020, a processor 1030, an I/O interface 1040, and a programming interface 1050 which are all linked together over one or more communication buses 1060. The processing system 1000 and its components may be modular or provided as a partially integrated system, or they may be provided as a fully integrated processing system.

The storage medium 1010 may be any form of non-volatile data storage device such as one or more of a hard disk drive, a magnetic disc, an optical disc, a ROM, etc. The storage medium 1010 may store an operating system for the processor 1030 to execute in order for the processing system 1000 to function. The storage medium 1010 may also store one or more computer programs (or software or instructions or code).

The memory 1020 may be any random access memory (storage unit or volatile storage medium) suitable for storing data and/or computer programs (or software or instructions or code).

The processor 1030 may be any data processing unit suitable for executing one or more computer programs (such as those stored on the storage medium 1010 and/or in the memory 1020), some of which may be computer programs according to embodiments of the invention or computer programs that, when executed by the processor 1030, cause the processor 1030 to carry out a method according to the invention and/or configure the processing system 1000 in accordance with the invention. The processor 1030 may comprise a single data processing unit or multiple data processing units operating in parallel or in cooperation with each other. The processor 1030, in carrying out data processing operations for embodiments of the invention, may store data to and/or read data from the storage medium 1010 and/or the memory 1020.

The I/O interface 1040 may be any unit for providing an interface to external components 1200, such as sensors, external circuitry, or other external hardware (such as the switching means 131, 331 and/or sensing means 133, 333). The I/O interface 1040 may receive data or signals from the external components 1200 and provide them to the storage medium 1010 and/or memory 1020 for storage. Additionally, or alternatively, the I/O interface 1040 may provide received data or signals from the external components 1200 to the processor 1030. The I/O interface may also comprise a wireless communication module (not shown) to enable the processing system 1000 to receive and/or transmit data wirelessly, e.g. using a wireless protocol such as Bluetooth, Bluetooth Low Energy (BLE), WiFi, NFC, Zigbee, ANT, or other suitable wireless communication protocols.

The programming interface 1040 may be any unit for providing an interface to an external device 1100, external to, or removable from, the processing system 1000. The external device 1100 may be a data storage device, for example, one or more of an optical disc, a magnetic disc, a solid-state-storage device, etc. The external device 1100 may have processing capabilities - for example, the external device may be a personal computer, smartphone, tablet, or the like. The programming interface 1040 may therefore access data from, or provide data to, or interface with, the external device 1100 in accordance with one or more commands that it receives from the processor 1030 or the external device 1100. For example, a user may use the external device 1100 to program or provide instructions to the processing system 1000 via one or more input devices 1110 (such as a mouse and/or keyboard) that are connected to, or in communication with, the external device 1100. Additionally, or alternatively, a user may use the external device 1100 to view, display, or interpret output provided by the processing system 1000 via one or more output devices 1120 (such as a screen, monitor, and/or audio components) that are connected to, or in communication with, the external device 1100.

It will be appreciated that the architecture of the processing system 1000 illustrated in figure 5 and described above is merely exemplary and that other processing systems 1000 with different architectures (for example with fewer components than shown in figure 5 or with additional and/or alternative components than shown in figure 5) may be used in embodiments of the invention. As examples, the processing system 1000 could comprise one or more of: a personal computer; a server computer; a mobile telephone; a tablet; a laptop; a television set; a set top box; a games console; other mobile devices or consumer electronics devices; etc.

### Method of Use

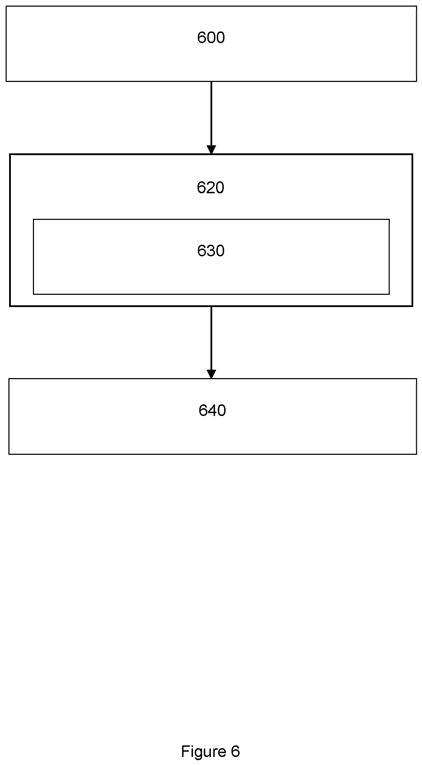

With reference to figure 6, a method of controlling a power output of a battery will now be described for completeness. It will be appreciated that this method of controlling a power output of a battery could be implemented using the battery 100 of figures 1a, 1b, and 2, and/or using the battery control device 300 of figures 3a, 3b, and 4.

The method comprises determining 620, by the control portion 130, 330, an environmental condition (such as a state of motion) of the battery 100, 200. Determining 620 an environmental condition of the battery 100, 200 may be performed in accordance with the determination of an environmental condition of a battery 100, 200 described herein above.

The method further comprises controlling 640, by the control portion 130, 330, a power output of the battery 100, 200 based on the determined environmental condition. Controlling 640 a power output of the battery may be performed in accordance with the control of the battery 100, 200 described herein above.

Optionally, the environmental condition is a state of motion of the battery 100, and the method may include obtaining 600 data relating to at least one acceleration of the battery 100, 200. Obtaining 600 the data may be performed in accordance with the obtaining of acceleration data described herein above.

Optionally, determining 600 a state of motion of the battery 100, 200 may include analyzing 630 data relating to at least one acceleration of the battery 100, 200. Analyzing 630 the data may be performed in accordance with the analysis of a state of motion described herein above.

It will be appreciated that the methods described have been shown as individual steps carried out in a specific order. However, the skilled person will appreciate that these steps may be combined or carried out in a different order whilst still achieving the desired result.

It will be appreciated that embodiments of the invention may be implemented using a variety of different information processing systems. In particular, although the figures and the discussion thereof provide exemplary devices, systems, and methods, these are presented merely to provide a useful reference in discussing various aspects of the invention. Of course, the description of the devices, systems, and methods has been simplified for purposes of discussion, and they are just one of many different types of device, system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality of the control portion 130, 330 or other features of the invention may be implemented as one or more corresponding modules as hardware and/or software. For example, the above-mentioned functionality of the control portion 130, 330 or other features of the invention may be implemented as one or more software components for execution by a processor of the system. Alternatively, the above-mentioned functionality of the control portion 130, 330 or other features of the invention may be implemented as hardware, such as on one or more field-programmable-gate-arrays (FPGAs), and/or one or more application-specific-integrated-circuits (ASICs), and/or one or more digital-signal-processors (DSPs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention may be implemented using a computer program, then a storage medium and a transmission medium carrying the computer program may form aspects of the invention. The computer program may have one or more program instructions, or program code, which, when executed by a computer carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

## Claims

1. A battery (100) comprising:
an electrical power supply portion (140) configured to supply electrical power to a device (400) connected to the battery; and
a control portion (130) configured to control a power output of the electrical power supply portion;
wherein the control portion is configured to control the power output of the electrical power supply portion based on a determined environmental condition of the battery.

2. The battery of claim 1, wherein the determined environmental condition of the battery is a determined state of motion of the battery.

3. The battery of claim 2, wherein the control portion is configured to determine the state of motion of the battery based on acceleration data obtained for the battery.

4. The battery of claim 3, wherein the control portion is configured to analyze the acceleration data to determine the state of motion of the battery.

5. The battery of any preceding claim, wherein the control portion is configured to control the power output of the electrical power supply portion between on and off states based on the determined environmental condition of the battery.

6. The battery of any preceding claim, wherein the control portion comprises one or more of a switching means (131), a processing means (132), and a sensing means (133).

7. The battery of any of claim 6, wherein at least one of:
the switching means comprises a solid state switch;
the sensing means comprises an accelerometer; or
the processing means comprises a microcontroller.

8. The battery of any preceding claim, wherein the control portion further comprises a control portion power supply (134).

9. The battery of claim 8, wherein the control portion power supply is configured to receive power from the electrical power supply portion, optionally wherein the electrical power supply portion is configured to supply power to the control portion power supply independently of the power it supplies to the device.

10. The battery of any preceding claim, wherein the electrical power supply portion and the control portion are contained in a housing (120) of the battery.

11. A battery control device (300) for controlling a battery (200) installed in a battery casing (510) of a device (500), the battery control device comprising a control portion (330) configured to control a power output of the battery based on a determined environmental condition of the battery.

12. The battery of claim 11, wherein the determined environmental condition of the battery is a determined state of motion of the battery.

13. The battery control device of claim 12, wherein the control portion is configured to determine the state of motion of the battery based on acceleration data obtained for the battery.

14. The battery control device of claim 13, wherein the control portion is configured to analyze the acceleration data to determine the state of motion of the battery.

15. The battery control device of any of claims 11-14, wherein the control portion comprises one or more of a switching means (131), a processing means (132), and a sensing means (133).
